# EUROPEAN PATENT APPLICATION

(11) **EP 1 511 307 A1**
(43) Date of publication of application: **02.03.2005**
(21) Application number: 04011917.4
(22) Date of filing: 19.05.2004
(51) Int. Cl.: H04N 5/76, H04N 5/00, G11B 20/12, G11B 27/034

(54) **Content data recording apparatus and content data recording method**

(30) Priority: 29.08.2003 JP 2003307641
(71) Applicant: Kabushiki Kaisha Toshiba, Tokyo 105-8001 (JP)
(72) Inventor: Kaibe, Hiroshi Int. Prop. Divi.,Toshiba Corp., Tokyo 105-8001 (JP)
(74) Representative: Henkel, Feiler & Hänzel

(57) **Abstract**

According to one embodiment, a content data recording apparatus for recording content data into a recording media comprises a receiving unit for receiving content data, a recording unit for recording the received content data into a first region (23) of a recording media while replacing with older content data existing therein, the first region (23) sustaining a predetermined capacity, an inputting unit for inputting a preserving instruction in order to preserve a certain content data, and a copying unit, corresponding to the preserving instruction, for copying the certain content data into a second region (22) if the certain content data exists in the first region (23) and the capacity of the second region (22) is sufficient to preserve the certain content data.

## Description

This invention relates to a content data recording apparatus and a content data recording method for recording content data such as a movie, TV program, video data, and audio data, into a recording media.

Conventionally, an apparatus having a function for making a connection to the Internet or the like and acquiring program information concerning a program to be broadcast is known. In this apparatus, program information on a broadcast is acquired from the Internet or the like, a user may request the apparatus to record video data of the program based on such program information, and the video data is recorded and accumulated in a hard disk. The program information includes information on a start time, an end time, and a channel. In addition, the hard disk unit has a list for managing an unused region and a used region.

In general, in the case where the user has supplied a request for recording a video data of a given program on and after broadcasting of the program has already been started, accumulation and storage from such an instructed time are performed. In this case, the contents broadcast from the program start time to the instructed time cannot be accumulated.

United States Patent number 6,212,328 shows one of the ways to solve this problem. According to this patent, a video signal and an audio signal of a program which is received are always recorded to a hard disk. When a command for program reservation is given, the rewriting of the recorded area in the hard disk is inhibited and the program can be preserved to the hard disk in a range which does not exceed a predetermined time while tracing back to the past. The program is recorded to the hard disk until the end time of the program.

However, in the above-described patent, no consideration is taken into how a variety of data is managed on a hard disk. For example, during real time image recording/storage processing, the patent fails to disclose in what region on the hard disk, data is recorded. In addition, no consideration is taken into a relationship between an unused region and a used region.

A recording capacity of a hard disk is limited, and data copy or move is frequently performed. Thus, if a region on the hard disk is not managed reliably, there is a possibility that an error occurs during recording of program or a failure such as erasure of video data to be stored occurs.

Embodiments of the present invention may provide a content data recording apparatus and a content data recording method, capable of managing a region on the magnetic disk, and preserving, even when a preserving instruction is input after starting a program, the program of the contents broadcast from the start time of the program up to a time instructed.

According to one aspect of the present invention, there is provided a content data recording apparatus for recording content data into a recording media, comprising means for receiving content data; means for recording the received content data into a first region of a recording media while replacing with older content data existing therein, the first region sustaining a predetermined capacity; means for inputting a preserving instruction in order to preserve a certain content data; and means, corresponding to the preserving instruction, for copying the certain content data into a second region if the certain content data exists in the first region and the capacity of the second region is sufficient to preserve the certain content data.

According to another aspect of the present invention, there is provided a content data recording method for recording content data into a recording media, comprising receiving content data; recording the received content data into a first region of a recording media while replacing with older content data existing therein, the first region sustaining a predetermined capacity; inputting a preserving instruction in order to preserve a certain content data; and copying, corresponding to the preserving instruction, the certain content data into a second region if the certain content data exists in the first region and the capacity of the second region is sufficient to preserve the certain content data.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary block diagram showing a configuration of a content recording apparatus according to an embodiment of the present invention;
FIG. 2 is an exemplary block diagram showing a schematic configuration of regions on a magnetic disk of a hard disk drive according to the embodiment;
FIG. 3 is an exemplary flow chart showing an operation during preparatory content recording according to the embodiment;
FIG. 4 is an exemplary flow chart showing an operation accompanying channel switching instruction according to the embodiment; and
FIGS. 5A and 5B are an exemplary flow chart showing an operation accompanying preserving instruction according to the embodiment.

Various embodiments of the invention will be described hereinafter with reference to the accompanying drawings. In general, according to one embodiment of the invention, a content data recording apparatus for recording content data into a recording media comprises a receiving unit, a recording unit, an inputting unit, and a copy unit. The receiving unit is adapted to receive content data. The recording unit is adapted to record the received content data into a first region of a recording media while replacing with older content data existing therein. The first region having a predetermined capacity. The inputting unit is adapted to input a preserving instruction in order to preserve a certain content data. The copying unit is adapted to copy the certain content data into a second region if the certain content data exists in the first region and the capacity of the second region is sufficient to preserve the certain content data. The content data includes video data, audio data, TV program, movie, and so on. The content data recording apparatus may be adapted as a HDD recorder, a personal computer, a television, or the like.

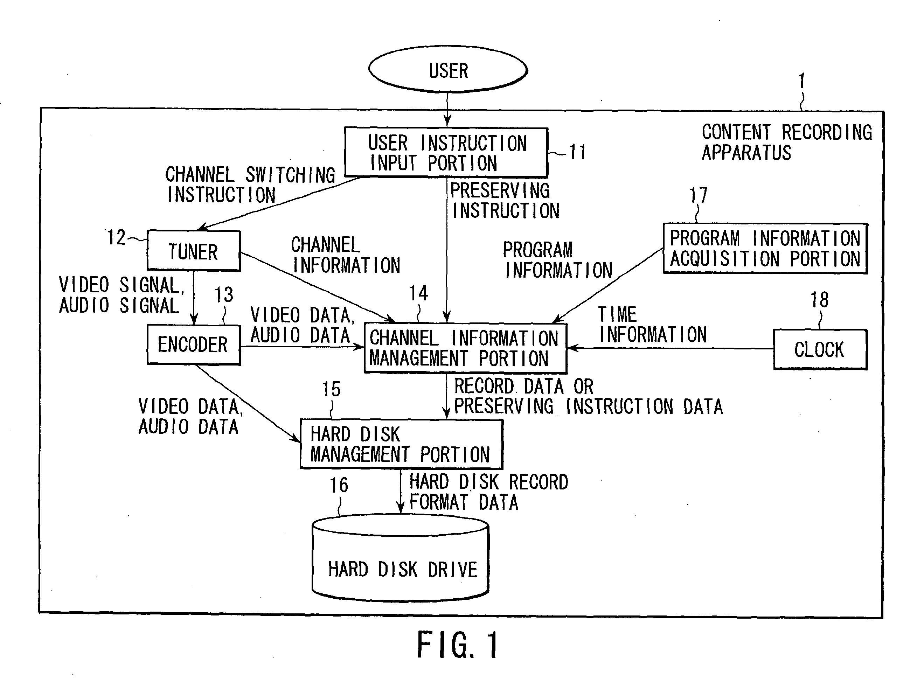

According to an embodiment, FIG. 1 shows a configuration of a content recording apparatus 1 (hereinafter "apparatus 1") which functions as a hard disk recorder capable of preparatively recording video data and audio data on a TV program or the like broadcast at a TV station or the like. The apparatus 1 includes a user instruction input portion (hereinafter "UIIOP") 11, a tuner 12, an encoder 13, a channel information management portion (hereniafter "CIMP") 14, a hard disk management portion (hereinafter "HDMP") 15, a hard disk drive 16 which includes a magnetic disk as a recording media, a program information acquisition portion (hereinafter "PIAP") 17, and a clock 18.

The UIIP 11 comprises switches, keys, and/or wireless receiver, which receives a wireless signal (e.g., infrared "IR" signal, radio-frequency "RF" signal, etc.) transmitted from a remote controller, and is used for input of user's instruction. A user inputs an instruction such as a channel switching instruction, a preserving instruction of video/audio data, by using the UIIP 11. The channel switching instruction is transmitted to the tuner 12, and the preserving instruction is transmitted to the CIMP 14. The UIIP 11 may transmit the channel switching instruction to the CIMP 14.

The tuner 12 receives a channel switching instruction from the UIIP 11, and then switches a channel in accordance with the channel switching instruction. The tuner 12 receives a broadcast of the channel instructed, then extracts a video signal and an audio signal from the received broadcast, and transmits a video signal and an audio signal to the encoder 13.

The encoder 13 receives the video signal and audio signal delivered from the tuner 12, and then encodes the video signal and the audio signal in order to generate video data and audio data respectively. After the encoding, the encoder 13 transmits the video data and the audio data to the CIMP 14 and the HDMP 15.

The CIMP 14 and the HDMP 15 are functions performed by a processor (e.g., main CPU), a ROM that stores programs and data executed and used by the processor, and a RAM used as a workspace by the processor. The processor performs operations described hereinbelow, using the RAM and programs stored in the ROM. Therefore, the processor, the ROM, and the RAM functions as a control unit of the apparatus 1. Moreover, the processor may constitute the main CPU of the apparatus, or may constitute an application-specific integrated circuit, digital signal processor, microcontroller, or other integrated circuit with data processing capability.

The CIMP 14 receives several data and information, that is video data and audio data from the encoder 13, time information from the clock 18, and channel information from the tuner 12. Then, the CIMP 14 creates record data for each unit time on the basis of the received data and information, and transmits the record data and a record instruction to the HDMP 15 in order to record the record data into the hard disk.

In the meantime, if the CIMP 14 receives a preserving instruction from the UIIP 11, the CIMP 14 performs an operation for traceable recording. For this purpose, the CIMP 14 collects time information from the clock 18, channel information from the tuner 12, and program information from the PIAP 17, and makes a search for program information on the basis of the time information and channel information. As a result of the search, the CIMP 14 receives start time data and end time data of a program to be preserved corresponding to the preserving instruction. After receiving, the CIMP 14 creates preserving instruction data including the channel information, start time data, and end time data, and provides the preserving instruction data to the HDMP 15.

The HDMP 15 converts the record data received from the CIMP 14 in a format in which the data is stored in the hard disk 16, and records the data in the format in the magnetic disk for each data record unit.

In the meantime, if the HDMP 15 receives the preserving instruction data from the CIMP 14, the HDMP 15 searches for individual hard disk data record units stored in the hard disk drive 16 on the basis of the channel information data, start time data, and end time data which are included in the preserving instruction data. Then, the HDMP 15 preserves the hard disk data record units in a predetermined region in the magnetic disk of the hard disk drive 16.

The data provided from the HDMP 15 is recorded, erased, or preserved in each hard disk data record unit by the HDMP 15.

For this embodiment of the invention, the hard disk drive 16 includes the magnetic disk, a magnetic head, a rotary actuator, a voice coil motor for rotating in the direction of the radius of the magnetic disk, spindle motor for rotating the disk at a high speed, a coil motor driving circuit for driving the voice coil motor, a spindle motor driving circuit for driving the spindle motor, a data recording/reproducing circuit for recording and reproducing data into/from the hard disk, and a disk controller for providing write data to the data recording/reproducing circuit. The hard disk drive 16 also, has a control processor for controlling the coil motor driving circuit, the spindle motor driving circuit, and the disk controller, and a ROM for storing program and data executed and used by the control processor.

The PIAP 17 includes wireless and/or wired communication device therein and acquires program data equivalent to an Electronic Program Guide (hereinafter "EPG") from the Internet or the like.

The clock 18 delivers time information to the CIMP 14.

Now, a description will be given with respect to a variety of "information", "data", and "signal" for used in the apparatus 1.

The video signal is a signal outputted from the tuner 12, and has a format in which received images are arranged in order of times.

The audio signal is a signal outputted from tuner 12, and has a format in which received sounds are arranged in order of times.

The video data is a signal outputted from the encoder 13. The encoder 13 generates the video data by compressing the video signal by means of digital processing or the like. The video data has a format that may be separated at each predetermined time interval.

The audio data is a signal outputted from the encoder 13. The encoder 13 generates the audio data by compressing the audio signal by means of digital processing or the like, as well as the generation of video data. The audio data has a format that may be separated at each predetermined time interval.

The channel information is data indicative of a channel number selected by the tuner 12.

The channel switching instruction is equivalent to information for identifying a channel to be changed.

The program information output from the PIAP 17 involves one or more groups of information. Each group includes a channel, a program start time, and a program end time.

The time information is equivalent to information on a time indicated by the clock 18.

The record data includes video data in a unit of time, audio data in a unit time, time information, channel information, and unit time data. The unit time data is data indicative of a difference in both time data between the time that previous record data is generated and the time that current record data is generated. Though the time data corresponds to a time when video data in the unit time and audio data in the unit time are started, the time data may be changed to another form as long as there is a correlation with a time when the video data or audio data in the record data is actually formed.

The preserving instruction includes data of' channel information, start time data, and end time data.

A hard disk data record unit (hereinafter "record unit") is the minimum unit when the record data is recorded in the magnetic disk of the hard disk drive 16, and is equivalent to a housing or a receiver of record data. That is, record data is divided or integrated in size suitable to be recorded in the disk of the hard disk drive 16.

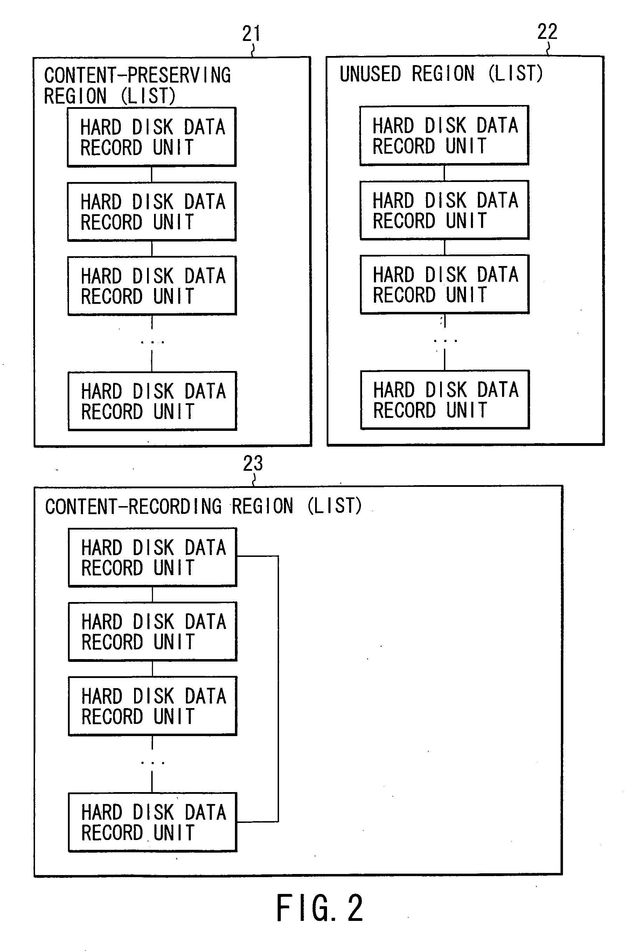

FIG. 2 shows a schematic configuration of regions on the magnetic disk of the hard disk drive 16 seen from the side of the HDMP 15. The HDMP 15 defines regions on the hard disk 16 to be divided into a content-preserving region 21, an unused region 22, and a content-recording region 23, and manages each region in the format of listing. The operations related to the management of the regions by the HDMP 15 are executed by the processor therein, using software program stored in the ROM.

The content-preserving region 21 stores 0 or more record units, and the HDMP 15 manages it as a aggregation or list of record units stored in the content-preserving region 21. The record unit stored in the content-preserving region 21 is used for recording program information, such as video data and audio data. In the case of doing playback of the recorded program information, the HDMP 15 takes out a plurality of record units from the content-preserving region 21, and sends out them to a playback-apparatus (not shown). The playback-apparatus plays audio data and/or video data included therein. Further, the content-preserving region 21 may configure lists for each program in order to ensure easy identification between the preserved programs. This is similar to a structure of a file or directory on a general file system.

The unused region 22 stores 0 or more record units, and the HDMP 15 manages it as an aggregation or list of record units stored in the unused region 22. The record units stored in the unused region 22 do not have to store information, in particular. That is, a case where the hard disk drive 16 is in an initialized state is acceptable. Similar function is achieved by a free space management list or the like in a general file system as well.

The content-recording region 23 stores 0 or more record units, and the HDMP 15 manages it as an aggregation or list of record units stored in the content-recording region 23. The content-recording region 23 sustains a predetermined capacity, and forms a circulation list structure including 0 or more record units. Therefore, in the case where the number of record units exceeds a predetermined number, the HDMP 15 automatically erases the oldest record unit at a time when a new record unit is stored. A last index indicative of the end of a list exists in the circulation list structure. This circulation list structure is effective for performing automatic erasure described above. It is possible to achieve this configuration in a table or the like.

In addition, as the data structure in the hard disk drive 16, there is a structure of referring to record units indexed based on time data and channel information. Thus, this structure makes the HDMP 15 easy to search or erasure of record units.

Now, a variety of functions of the HDMP 15 will be described below.

The apparatus 1 records video data and audio in the content-recording region 23 during content recording without the preserving instruction. This is a preparatory recording in order to trace and recover the TV program from the beginning to the end even though a user inputs a preserving instruction in the halfway of the TV program or after the TV program had finished. The user may set the apparatus 1, so that a preparatory recording for every channel is always performed, or so that a preparatory recording only for particular channel or TV program is performed. Furthermore, the user may set the traceable time in the length that the user wants, e.g. 1 hours, 3 hours, 6 hours, 12 hours, or 24 hours, depending on the capacity of the hard disk drive 16, and how often the preparation recording is performed.

In the case where a user inputs the preserving instruction for a certain TV program through the UIIP 11 during the preparation recording, the HDMP 15 verifies that a free capacity sufficient to copy the TV program data stored in the content-recording region 23 is present in the unused region 22. If there is enough capacity in the unused region 22, the HDMP 15 copies and stores the TV program data from the content-recording region 23 into a predetermined region of the unused region 22. Then, the HDMP 15 manages the predetermined region, switching from the unused region 22 to the content-preserving region 21. Moreover, as described above, the HDMP 15 manages the content-preserving region 21, unused region 22, and content-recording region 23 as a list including one or a plurality of record units equivalent to the minimum unit for storing data.

The HDMP 15 may move a record unit between the unused region 22 and the content-preserving region 21. For example, in the case where a certain data has been preserved in accordance with a preserving instruction, the HDMP 15 moves the record unit storing the certain data from the unused region 22 to the content-preserving region 21.

Furthermore, in the case where a preserving instruction is input, the HDMP 15 makes a search for one or a plurality of record units in which the data has been stored from among the content-recording region 23. When the HDMP 15 has found the certain data and the search has been successfully made, the HDMP 15 verifies whether or not a required number of hard disk data record units may be taken out from the unused region 22. If the required number of record units have been successfully taken out from the unused region 22, the HDMP 15 copies the certain data possessed by the record unit searched from among the content-recording region 23, and adds the record unit to the content-preserving region 21.

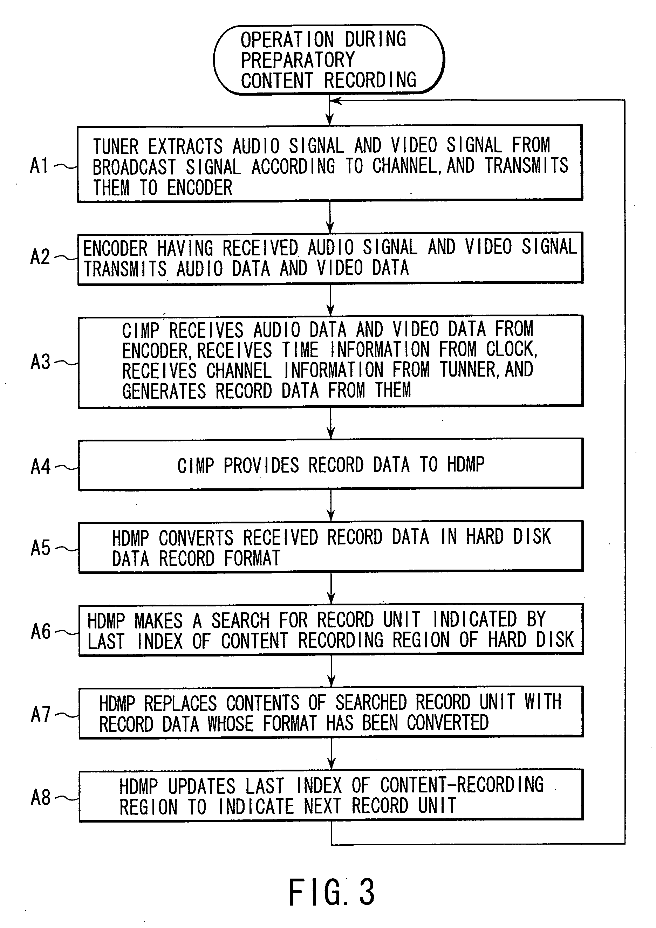

Now, an illustrative operation during preparatory content recording will be described referring to FIG. 3.

The tuner 12 extracts an audio signal and a video signal from a broadcast signal according to a channel, and transmits the audio signal and the video signal to the encoder 13 (block A1).

The encoder 13 having received the audio signal and video signal transmits audio data and video data (block A2).

The CIMP 14 receives the audio data and the video data from the encoder 13, time information from the clock 18, channel information from the tuner 12, and generates record data therefrom (block A3).

The CIMP 14 provides the record data to the HDMP 15 (block A4).

The HDMP 15 converts the received record data in a hard disk data record format (block A5).

The HDMP 15 makes a search for a record unit indicated by a last index of the content-recording region of the magnetic disk (block A6). The HDMP 15 replaces the contents of the searched record units with the record data whose format has been converted as described above (block A7).

The HDMP 15 updates the last index of the content-recording region 23 to indicate the next record unit (block A8).

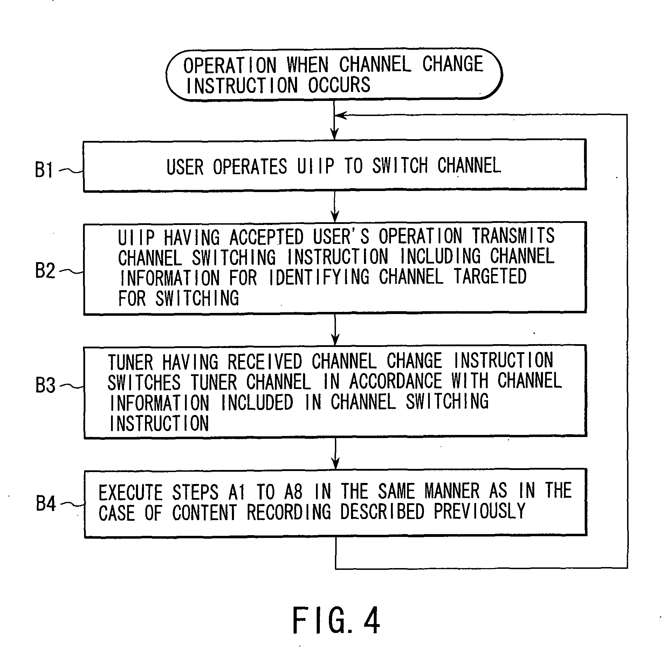

Now, an operation when a channel switching instruction occurs will be described referring to FIG. 4.

According to one embodiment of the invention, a user operates the UIIP 11 to switch channel (block B1). The UIIP 11 having accepted the user's operation transmits to the tuner 12 a channel switching instruction including channel information for identifying a channel targeted for switching (block B2).

The tuner 12 having received the channel switching instruction switches a channel of the tuner 12 in accordance with the channel information included in the channel switching instruction (block B3).

The sub-operations identical to those set forth in blocks A1-A8 of the above-described operation during content-recording are executed (block B4).

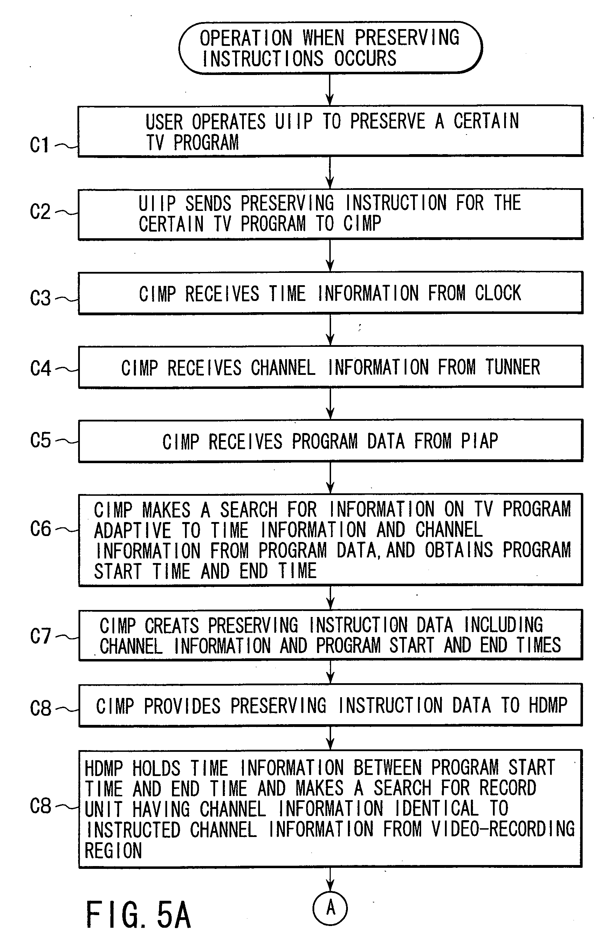

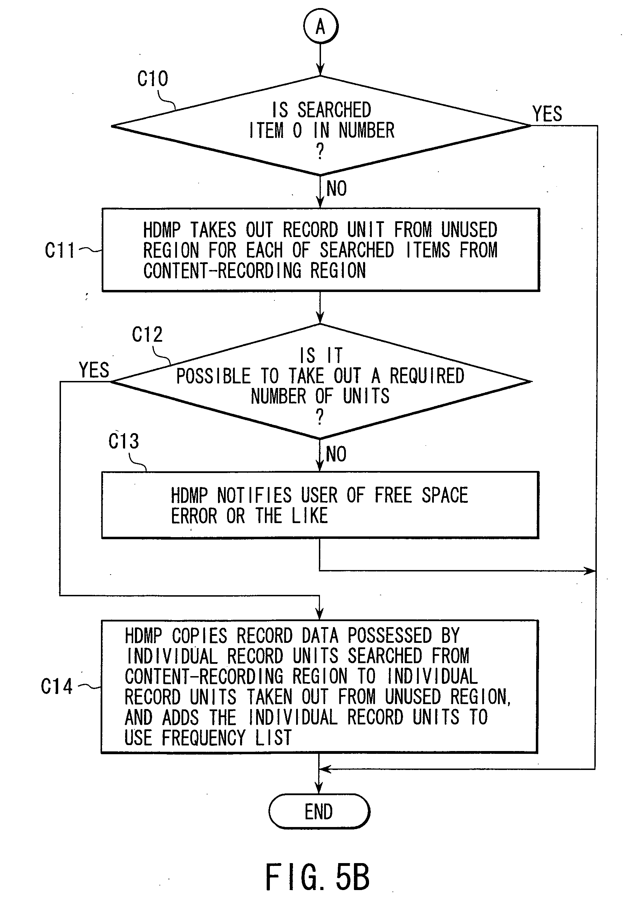

Now, an exemplary operation when a preserving instruction occurs will be described referring to FIGS. 5A and 5B.

A user operates the UIIP 11 to preserve a certain TV program (block C1). The UIIP 11 sends the preserving instruction for preserving the certain TV program to the CIMP 14 (block C2).

Once the CIMP 14 received the preserving instruction, the CIMP 14 starts to gather information related to the preserving instruction, e.g., time information, channel information, and program data. The CIMP 14 receives time information from the clock (block C3). The CIMP 14 receives channel information from the tuner 12 (block C4). The CIMP 14 also receives program data from the PIAP 17 (block C5). Then, the CIMP 14 makes a search for information on a TV program adaptive to time information and channel information from program data, and obtains the start and end times of the TV program (block C6). The-CIMP 14 creates preserving instruction data, including the channel information and the program start and end times (block C7). The CIMP 14 provides the preserving instruction data to the HDMP 15 (block C8).

The HDMP 15 holds time information between the program start and end times and makes a search for the record unit having channel information identical to the instructed channel information from the content-recording region 23 (block C9).

Here, it is determined whether or not the searched number is 0 (block C10).

If the searched item is 0 in number, no action is taken in particular except for informing the user of no record data. On the other hand, if the searched item is not 0 in number, the HDMP 15 takes out a record unit from the unused region 22 in each of the searched items from the content-recording region 23 (block C11).

Here, it is determined whether or not a required number of record units can be taken out, in other words, whether or not free space in the unused region 22 is enough to store the searched items (block C12).

If the required number of record units cannot be taken out, the HDMP 15 notifies the user of a free space error or the like (block C13). On the other hand, if the required number of record units can be taken out, the HDMP 15 copies record data possessed by individual record units searched from the content-recording region 23 to the individual record units taken out from the unused region 22, and adds the individual record units to the used region list 21 (block C14).

In this manner, according to the present embodiment, in the case where a reserving instruction is input, predetermined processing is performed for each of the content-preserving region, unused region, and content-recording region. Thus, a region on the magnetic disk may be reliably managed, and, even when a preserving instruction is input after starting a program, the TV program of the contents broadcast may be preserved from the start time of the program up to a time instructed as long as the certain content is recorded in the content-recording region.

The above-described embodiment has described a case in which one tuner and one encoder are installed in the content recording apparatus. However, a plurality of tuners and encoders may be used and configured without being limited thereto. In such case, a plurality of programs whose channels are different from each other are accumulated from the start of each TV program. Even if a preserving instruction is input from the user on and after the program start time, it is possible to preserve the TV program from the start.

In addition, the above embodiment has described a case of handling both of video data and audio data. However, a configuration of handing only audio data may be provided without being limited thereto. In this case, application to a radio broadcast becomes possible. On the other hand, a configuration of handing only video data may be provided. In the case where audio data is eliminated, a storage capacity is reduced without storing the audio data, whereby a time capable of storage in a hard disk can be extended.

The above embodiment also has described an apparatus for content recording a broadcast program. However, it is possible to apply to accumulation of moving pictures and use them for the purpose of security. Specifically, instead of receiving a broadband broadcast program by the tuner, a region specific broadcast is performed from instruments such as security camera, and this broadcast is received by the content recording apparatus, thereby making it possible to record a video data. Further, program information is set to this region specific broadcast, thereby making it possible to ensure storage on a time date-back basis based on a user's instruction. That is, when security use is provided, content recording dating back it can be performed at a time when any event occurs.

## Claims

1. A content data recording apparatus for recording content data into a recording media, **characterized by** comprising:
means (14) for receiving content data;
means (15, 16) for recording the received content data into a first region of a recording media while replacing with older content data existing therein, the first region sustaining a predetermined capacity;
means (15) for inputting a preserving instruction in order to preserve a certain content data; and
means (15), corresponding to the preserving instruction, for copying the certain content data into a second region if the certain content data exists in the first region and the capacity of the second region is sufficient to preserve the certain content data.

2. A content data recording apparatus according to claim 1, **characterized by** further comprising, means (15) for defining accompanying with the copying operation that the copied content data exists in a third region which is used for preserving content data.

3. A content data recording apparatus according to claim 2, **characterized by** further comprising, means (15) for managing data stored in the first region as a first aggregation including one or more data record units, data stored in the second region as a second aggregation including one or more data record units, and data stored in the third region as a third aggregation including one or more data record units.

4. A content data recording apparatus according to claim 3, **characterized in that** data record unit is equivalent to a minimum unit for recording data.

5. A content data recording apparatus according to claim 4, **characterized in that** each data record unit is able to be moved between the second region and the third region.

6. A content data recording apparatus according to claim 5, **characterized in that** when content data has been recorded in accordance with the preserving instruction, a data record unit storing the certain content data is moved from the second region to the third region.

7. A content data recording apparatus according to claim 4, **characterized in that** the copying means (5) includes means, corresponding to the preserving instruction, for searching for the first region whether or not there are the data record units in which the certain content data has been stored.

8. A content data recording apparatus according to claim 7, **characterized in that** the copying means (5) includes means, when the searching means has found the data record searched, for verifying whether or not a required number of the data record units may be taken out from the second region in order to check that there is enough capacity in the second region.

9. A content data recording apparatus according to claim 8, **characterized in that**, if the required number of data record units is able to be taken out from the second region, the copying means (15) copies the certain content data possessed by the data record units in the first region to the taken-out data record units out of the second region, and adds the data record unit to the list of the third region.

10. A content data recording apparatus according to claim 1, **characterized in that** the content data is TV program.

11. A content data recording method for recording content data into a recording media, **characterized by** comprising:
receiving (A1 to A4) content data;
recording (A5 to A8) the received content data into a first region of a recording media while replacing with older content data existing therein, the first region sustaining a predetermined capacity;
inputting (C1 to C8) a preserving instruction in order to preserve a certain content data; and
copying (C9 to C14), corresponding to the preserving instruction, the certain content data into a second region if the certain content data exists in the first region and the capacity of the second region is sufficient to preserve the certain content data.

12. A content data recording method according to claim 11, **characterized by** further comprising, defining accompanying with the copying operation that the copied content data exists in a third region which is used for preserving content data.

13. A content data recording method according to claim 12, **characterized by** further comprising, managing data stored in the first region as a first aggregation including one or more data record units, data stored in the second region as a second aggregation including one or more data record units, and data stored in the third region as a third aggregation including one or more data record units.

14. A content data recording method according to claim 13, **characterized in that** data record unit is equivalent to a minimum unit for recording data.

15. A content data recording method according to claim 14, **characterized in that** each data record unit is able to be moved between the second region and the third region.

16. A content data recording method according to claim 15, **characterized in that** when content data has been recorded in accordance with the preserving instruction, a data record unit storing the certain content data is moved from the second region to the third region.

17. A content data recording method according to claim 14, **characterized by** further comprising searching (C9), corresponding to the preserving instruction, for the first region whether or not there are the data record units in which the certain content data has been stored.

18. A content data recording method according to claim 17, **characterized by** further comprising verifying (C10 to C12), when the data record searched has been found, whether or not a required number of the data record units may be taken out from the second region in order to check that there is enough capacity in the second region.

19. A content data recording method according to claim 18, **characterized in that**, if the required number of data record units is able to be taken out from the second region, the certain content data possessed by the data record units in the first region is copied to the taken-out data record units out of the second region, and the data record unit is added to the list of the third region (C14).

20. A content data recording method according to claim 11, **characterized in that** the content data is TV program.
